# EUROPÄISCHE PATENTSCHRIFT

(11) **EP 3 379 122 B1**
(45) Veröffentlichungstag und Bekanntmachung des Hinweises auf die Patenterteilung: **29.01.2020**
(21) Anmeldenummer: 18158903.7
(22) Anmeldetag: 27.02.2018
(51) Int. Cl.: F16L 3/08, F01D 25/18, F01D 9/06

(54) **STRÖMUNGSMASCHINE MIT MONTAGEELEMENT**
TURBOMACHINE WITH ASSEMBLY ELEMENT
TURBOMACHINE AVEC DE L'ÉLÉMENT D'ASSEMBLAGE

(30) Priorität: 23.03.2017 DE 102017204954
(43) Veröffentlichungstag der Anmeldung: 26.09.2018
(73) Patentinhaber: MTU Aero Engines AG, 80995 München (DE)
(72) Erfinder: Miller, Thomas, 82275 Emmering (DE)

(56) Entgegenhaltungen:
- EP-A1- 2 085 574
- EP-A2- 1 531 237
- CN-U- 203 189 879
- FR-A1- 2 756 767
- GB-A- 2 212 240

## Beschreibung

### Technisches Gebiet

Die vorliegende Erfindung betrifft eine Strömungsmaschine mit einem Montageelement.

### Stand der Technik

Wie nachstehend im Einzelnen erläutert, kann es sich bei der Strömungsmaschine bevorzugt um ein Strahltriebwerk handeln. Zusätzlich zu den im Heißgaskanal angeordneten Bestandteilen, wie den Leit- und Laufschaufeln, weist eine solche Strömungsmaschine eine Vielzahl weiterer Bauteile auf, die in einer bestimmten Relativanordnung zusammengesetzt werden. Dies können bspw. tragende Bauteile sein, die für andere Bauteile als Lager, Halterung etc. dienen. Ferner gibt es auch Fluidleitungen, nicht nur zur Treibstoffzufuhr, sondern bspw. auch zur Versorgung eines Lagers mit einem Schmiermittel oder auch zur Entlüftung. Es stellt sich jedenfalls die Herausforderung, unterschiedliche Bauteile zusammenzusetzen und in ihrer Relativanordnung zu stabilisieren, wozu ein Montageelement vorgesehen werden kann, das dann bspw. das eine Bauteil gegen das andere verspreizt.

Die EP 1 531 237 A2 betrifft die Lagerung eines Steuerrings für verstellbare Leitschaufeln mittels mehrerer Bimetallstreifen zum Ausgleich thermischer Dehnungen.

Die CN 203 189 879 U und die GB 2 212 240 A betreffen Klemmen bzw. Halterungen für den Mobilbau, in die jeweils mehrere Kabel bzw. Leitungen eingelegt werden können. Zur Befestigung werden die Halterungen ihrerseits verschraubt.

Die EP 2 085 574 A1 betrifft die Montage eines Centerwind-Rohres in einer Welle eines Triebwerks, wobei die Montage mit sich verspreizenden Formgedächtniselementen erfolgt.

Die FR 2 756 767 A1 betrifft einen mikromechanischen Greifer für Linsen, der über ein Formgedächtnismaterial gestellt wird.

### Darstellung der Erfindung

Der vorliegenden Erfindung liegt das technische Problem zugrunde, eine besonders vorteilhafte Strömungsmaschine mit einem Montageelement anzugeben.

Erfindungsgemäß wird diese Aufgabe zum einen mit einer Strömungsmaschine gemäß Anspruch 1 gelöst, bei welcher das Montageelement als Bimetallelement ausgeführt ist, sowie zum anderen
mit einer Strömungsmaschine gemäß Anspruch 4, bei welcher das Montageelement eine Formgedächtnislegierung aufweist.

Bevorzugte Ausführungsformen finden sich in der vorliegenden Beschreibung und den abhängigen Ansprüchen, wobei in der Darstellung der Merkmale nicht immer im Einzelnen zwischen Verfahrens- und Vorrichtungs- bzw. Verwendungsaspekten unterschieden wird; jedenfalls implizit ist die Offenbarung hinsichtlich sämtlicher Anspruchskategorien zu lesen.

Den beiden Lösungsvarianten, also dem Bimetallelement gemäß Anspruch 1 und der Formgedächtnislegierung gemäß Anspruch 4 liegt dieselbe erfinderische Idee zugrunde. Beide Montageelemente zeigen nämlich eine Veränderung ihrer Form bei einer Temperaturänderung, das Bimetall reversibel, die Formgedächtnislegierung mitunter auch nur einmalig ein Einschnappen (Einweg-Memory-Effekt, siehe unten im Detail). Das Formänderungsverhalten kann bspw. dahingehend vorteilhaft sein, dass das Montageelement während des Zusammenbaus, also während der Montage, eine erste Form hat, die bspw. auf die Montage hin optimiert sein, also ein Einsetzen erleichtern kann, insbesondere bei schwer zugänglichen Stellen. Diese erste Form hat das Montageelement in der Regel bei Raumtemperatur, und es kann dann bspw. durch Aufheizen in eine zweite Form gebracht werden, die auf die Stabilisierungsfunktion hin optimiert ist, also auf die gewünschte Relativanordnung und auch Lagerung der Bauteile.

Das Bimetallelement kann diese zweite Form bspw. bei den hohen Temperaturen annehmen, welchen die Bestandteile der Strömungsmaschine bei deren Betrieb ausgesetzt sind. Mit der Formgedächtnislegierung kann einerseits auch ein solches reversibles Verhalten erreicht werden (Zweiweg-Memory-Effekt, siehe unten), andererseits kann die Formänderung beim Einweg-Memory-Effekt jedoch auch nur einmalig sein. Diese einmalige Formänderung kann dann bspw. mit der ersten Inbetriebnahme der Strömungsmaschine erfolgen oder auch bereits zuvor gezielt herbeigeführt werden, bspw. durch eine lokale Heißluftbeaufschlagung.

Mit der Formänderung, egal ob einmalig oder reversibel, können die mittels des Montageelements zueinander stabilisierten Bauteile einerseits zueinander ausgerichtet, insbesondere zentriert werden. Andererseits kann die Formänderung aber auch ein verbessertes Dämpfungsverhalten ergeben, etwa wenn das Montageelement an dem einen Bauteil nur anliegt und die Formänderung dann den Reibkontakt sicherstellt, siehe unten im Detail. Es kann vorteilhafterweise ein selbst nachstellender bzw. in einer dämpfungsoptimierten Position einschnappender Dämpfer realisiert werden.

Bevorzugt ist das Montageelement flächig ausgebildet, hat es also in einer Dickenrichtung eine geringere Dicke als in zumindest einer der dazu senkrechten Flächenrichtungen, bevorzugt als in sämtlichen Flächenrichtungen. Die Dicke kann bspw. höchstens 1/5, 1/10 bzw. 1/20 der Erstreckung in Flächenrichtung ausmachen, wobei mögliche Untergrenzen (davon unabhängig) bspw. bei mindestens 1·10⁻⁵, 10⁻⁴ bzw. 10⁻³ liegen können. Das Montageelement kann im Allgemeinen bspw. auch eine Plattenform haben, bevorzugt ist es streifenförmig, also als langes schmales bandartiges Stück ausgebildet (in einer Längsrichtung länger als in einer dazu senkrechten Querrichtung).

Im Folgenden wird zunächst das Bimetallelement weiter im Detail diskutiert. Dieses ist aus mindestens zwei Lagen aufgebaut, deren Material einen unterschiedlichen Ausdehnungskoeffizienten hat. Die Lagen folgen in Dickenrichtung aufeinander, die Temperaturänderung induziert dann eine Verbiegung des streifen- bzw. plattenförmigen Bimetallelements. Bevorzugt sind die Lagen aus unterschiedlichen Metallen vorgesehen, z. B. die eine aus Nickel und die andere aus Stahl, es ist bspw. auch eine Kombination aus Stahl mit einer Messinglegierung möglich. "Metall" ist ausdrücklich nicht nur auf Reinmetalle, sondern bspw. auch auf Legierungen zu lesen. Unabhängig davon im Einzelnen sind die Lagen des Bimetallelements miteinander stoff- und/oder formschlüssig verbunden, es kann bspw. auch die eine Lage als Beschichtung auf die andere aufgebracht sein. Andererseits sind aber auch zuvor jeweils für sich gesondert hergestellte Lagen möglich, die dann bspw. gefügt und/oder geklemmt werden, bspw. auch nur an ihren in Bezug auf die Längenerstreckung einander entgegengesetzten Enden. Die Lagen können sich dann jedenfalls nicht gänzlich frei gegeneinander bewegen, weswegen sich mit den unterschiedlichen Wärmeausdehnungskoeffizienten bei einer Temperaturänderung die Verbiegung ergibt.

Bei einer bevorzugten Ausführungsform stabilisiert das Bimetallelement das erste und das zweite Bauteil bei einer Temperaturzunahme zunehmend in der Relativandorndung, hält es also die Bauteile bei zunehmender Temperatur mit zunehmender Kraft in ihrer Relativanordnung. Im Allgemeinen wäre indes auch ein gegenläufiges Verhalten als "Optimierung der Stabilisierungsfunktion" denkbar, wenn bspw. Bauteile bei der höheren Temperatur gezielt mit einem größeren Spiel zueinander gehalten sein sollen. Bei der hingegen bevorzugt mit der Temperatur zunehmenden Stabilisierung ergibt sich mit der Formänderung zu den höheren Temperaturen hin eine zunehmende Anpresskraft des Montageelements quer zu seiner Längs- bzw. Flächenerstreckung.

Soweit generell im Rahmen dieser Offenbarung auf eine "Temperaturzunahme" bzw. in allgemeinen Worten "Temperaturänderung" Bezug genommen wird, kann ein entsprechendes Verhalten dann jedenfalls innerhalb eines Temperaturintervalls auftreten, das bspw. über mindestens 50 °C, 100 °C, 150 °C, 200 °C, 250 °C bzw. 300 °C reichen kann (mögliche Obergrenzen können bspw. bei 1.500 °C bzw. 1.000 °C liegen und bspw. einer Disintegration der Materialien bei höhen Temperaturen geschuldet sein). Generell ist das Verhalten auch vor dem Hintergrund der in der Strömungsmaschine auftretenden Temperaturen zu sehen, wobei die vorliegend diskutierten Bauteile und das Montageelement bevorzugt außerhalb des Heißgaskanals angeordnet sind, insbesondere auch Gehäuse- bzw. Übergangsteile in das Gehäuse darstellen können.

Die Bauteile können im Betrieb der Strömungsmaschine bevorzugt eine Betriebstemperatur von mindestens 100 °C, weiter und besonders bevorzugt mindestens 150 °C bzw. 200 °C, erreichen, wobei mögliche Obergrenzen (davon unabhängig) bspw. bei höchstens 800°C, 600 °C, 500 °C, 400 °C bzw. 300 °C liegen können. Die "Temperaturzunahme" kann dann bspw. zumindest über ein Temperaturintervall von der Raumtemperatur (20 °C) bis zu der Betriebstemperatur reichen (und auch darüber hinaus, was aber für die Funktionalität unerheblich ist).

In bevorzugter Ausgestaltung hat zumindest eine der Lagen des Bimetallelements eine über ihre Flächenerstreckung variierende Dicke. Die Dicke kann im Falle des streifenförmigen Montageelements bspw. entlang der Längsrichtung des Streifens variieren, bspw. vom einen Ende zum anderen hin zunächst zu- und dann abnehmen, ggf. in Verbindung mit einem mittigen Bereich konstanter Dicke. Die Dickenänderung muss auch nicht zwingend kontinuierlich sein, es sind auch Sprünge möglich. Bevorzugt können beide bzw. sämtliche Lagen des Bimetallelements eine entsprechend variierende Dicke haben. Die variierende Dicke kann bspw. zum Einstellen eines nicht linearen bzw. transienten, zeitabhängigen Verhaltens von Interesse sein. Aufgrund der unterschiedlichen Dicke nehmen die verschiedenen Bereiche bei einer Temperaturänderung nicht sofort dieselbe Temperatur an, ein dickerer Bereich kann "träger" sein.

Zudem beeinflusst die Dicke auch das mechanische Verhalten, es wird also bspw. ein dickerer Bereich von dem durch die andere Lage induzierten Krafteintrag weniger verformt als ein dünnerer. Mit einem solchen nicht linearen bzw. transienten Verhalten kann die Anpresskraft des Montageelements gezielt eingestellt werden, was insbesondere hinsichtlich der Dämpfungsfunktion von Interesse sein kann. So können bspw. gezielt Schwingungen bzw. Vibrationen gedämpft werden, die bspw. während des Hochfahrens der Strömungsmaschine auftreten können. In allgemeinen Worten kann ein Montageelement mit transientem Verhalten gezielt auf Temperaturänderungen optimiert werden.

Wie bereits erwähnt, betrifft die Erfindung auch eine Strömungsmaschine mit einem Montageelement, das eine Formgedächtnislegierung aufweist. Diese kann abhängig von der Temperatur unterschiedliche Kristallstrukturen annehmen, die Formänderung resultiert dann aus einer temperaturabhängigen Gitterumwandlung. Die Hochtemperaturphase der Formgedächtnislegierung wird üblicherweise als Austenit bezeichnet, die Niedertemperaturphase als Martensit. Mit dem bereits erwähnten Einweg-Memory-Effekt kann sich die einmalige Formänderung bspw. ergeben, wenn das Montageelement im martensitischen Zustand pseudoplastisch verformt und dann erwärmt wird. Mit dem Abkühlen ergibt sich dann keine Formänderung, weswegen ein entsprechendes Montageelement vorstehend auch als "einschnappend" bezeichnet wurde. Dies ist im Falle der Formgedächtnislegierung bevorzugt, wenngleich im Allgemeinen mit dem Zweiweg-Memory-Effekt auch eine "reversible" Nutzung analog dem Bimetallelement denkbar ist.

Ein mögliches Material der Formgedächtnislegierung kann bspw. Nickel-Titan sein (NiTi, Nitinol) bzw. auch Nickel-Titan-Kupfer (NiTiCu). Es sind aber auch Legierungen mit Zink (Kupfer-Zink) bzw. Aluminium (CuZnAl oder CuAlNi) möglich.

Die Konkretisierungen der nachstehenden Absätze betreffen ohne ausdrücklich gegenteilige Angabe sowohl das Bimetallelement als auch die Formgedächtnislegierung.

In bevorzugter Ausgestaltung ist bzw. wird das Montageelement generativ gefertigt, jedenfalls teilweise, bevorzugt im Gesamten. Das Montageelement kann dabei aus einem Material oder geschichtet aus verschiedenen Materialien aufgebaut sein, wobei das bzw. die Materialien eine Dickenvariation und/oder eine Dichtevariation, insbesondere aufgrund von Hohlräumen, aufweisen können, um ein gezieltes transientes oder statisches Verformungsverhalten einzustellen. Damit sind eine große Bandbreite an Geometrien möglich, was etwa hinsichtlich des Bimetallelements mit der/den Lage(n) variierender Dicke von besonderem Interesse sein kann.

Das generative Fertigen kann bspw. ein Auftragschweißen sein, auch als DMD-Verfahren bezeichnet (*Direct Metal Deposition*). Der Werkstoff kann hierbei bspw. in Drahtform oder in Partikelform als Gemisch mit einem Gas vorgehalten werden. Andererseits kann aber bspw. auch generativ aus einem Pulverbett aufgebaut werden, durch Schicht für Schicht bereichsweise selektives Bestrahlen mit einer Strahlquelle. Unabhängig davon, ob DMD- oder pulverbettbasiertes Verfahren, ist die Strahlquelle bevorzugt ein Laser und wird mit elektromagnetischer Strahlung, insbesondere Laserstrahlung, bestrahlt (im Allgemeinen wären auch eine Elektronenstrahlquelle und ein Elektronenstrahl möglich).

Bei einer bevorzugten Ausführungsform ist das Montageelement in der Strömungsmaschine mit dem ersten Bauteil fest verbunden. Das Montageelement und das erste Bauteil sind also dort, wo sie aneinandergesetzt sind, relativ zueinander nicht beweglich.

In bevorzugter Ausgestaltung ist die feste Verbindung eine stoffschlüssige Verbindung. Im Allgemeinen ist bspw. auch ein direkt auf das erste Bauteil aufgebrachtes Montageelement denkbar, bevorzugt sind das Montageelement und das erste Bauteil miteinander fügeverbunden, besonders bevorzugt miteinander verlötet. Wenngleich Form- und Stoffschluss im Allgemeinen auch kombiniert sein können, ist eine ausschließlich stoffschlüssige Verbindung bevorzugt (ohne diese wären das Montageelement und das erste Bauteil dann nicht aneinander gehalten).

Bei einer bevorzugten Ausführungsform ist das erste Bauteil eine Fluidleitung. Es wird ausdrücklich auch auf die in der Stand der Technik-Würdigung genannten Möglichkeiten verwiesen. Das Fluid kann eine Flüssigkeit, aber auch ein Gas sein.

In bevorzugter Ausgestaltung ist die Fluidleitung eine Versorgungs- oder Entsorgungsleitung für ein Lager der Turbinenwelle, insbesondere der Hochdruckturbinenwelle. Die Fluidleitung kann bspw. als Versorgungsleitung Schmiermittel dorthin führen oder als Entsorgungsleitung der Entlüftung dienen.

Bei einer bevorzugten Ausführungsform liegt das Montageelement an dem zweiten Bauteil lediglich an. Die beiden können also in der Kontaktfläche zumindest ein Stück weit gegeneinander gleiten; sie stehen in einem Reibkontakt, was die bereits erwähnte Dämpfung ergeben kann. Das "lediglich Anliegen" meint, dass sie nicht fest miteinander verbunden sind, sondern nur eine Anlage aneinander haben.

In bevorzugter Ausgestaltung ist das Montageelement dabei derart vorgesehen, dass die Anpresskraft mit zunehmender Temperatur zunimmt (vgl. auch die vorstehenden Anmerkungen zu relevanten Temperaturbereichen). Mit der Anpresskraft wird das Montageelement in die Anlage am zweiten Bauteil gedrückt, es kann also der Reibkontakt und damit das Dämpfungsverhalten sichergestellt werden.

Bei einer bevorzugten Ausführungsform ist das zweite Bauteil, an dem das Montageelement lediglich anliegt, eine Stützstrebe, also ein tragender Bestandteil der Strömungsmaschine. Bevorzugt trägt die Stützstrebe das Lager der Turbinenwelle, insbesondere Hochdruckturbinenwelle. Das Lager ist bevorzugt im Turbinenbereich, im sogenannten *Turbine Centre Frame* angeordnet. Die Stützstrebe trägt das Lager in der Regel zusammen mit weiteren Stützstreben, die um die Längsachse der Strömungsmaschine umlaufend aufeinander folgend angeordnet sind, bspw. drehsymmetrisch um die Längsachse der Strömungsmaschine. Die Stützstreben können sich dann jeweils von dem Lager weg nach radial außen erstrecken (gewissermaßen speichenförmig) und das Lager so zentriert im Gehäuse halten.

Mit dem Lager, konkret dem Lagerträger, ist bzw. sind die Stützstreben fest verbunden, bspw. verschweißt und/oder verschraubt. Um die eben genannte "Längsachse" der Strömungsmaschine rotieren die Laufschaufelkränze im Betrieb. Die radialen Richtungen stehen senkrecht darauf.

Die Stützstrebe ist in bevorzugter Ausgestaltung als Hohlkörper ausgeführt. In einer senkrecht zu jener radialen Richtung, entlang welcher sie ihre Längserstreckung hat, liegenden Schnittebene betrachtet umschließt sie also einen Innenraum, jedenfalls teilweise, bevorzugt vollständig. In diesem Innenraum (bzw. Innenvolumen bei Betrachtung des Hohlkörpers) ist das erste Bauteil angeordnet, bevorzugt die Fluidleitung.

Besonders bevorzugt ist also das Montageelement an einer Außenwand der Fluidleitung befestigt, insbesondere dort angelötet, und ist die Gesamtheit aus Fluidleitung und Montageelement in den Stützstreben-Hohlkörper eingesetzt. An dem Stützstreben-Hohlkörper liegt das Montageelement dann lediglich an, und zwar an einer das Innenvolumen des Hohlkörpers begrenzenden Innenwandfläche. Die Bimetall- bzw. Formgedächtnis-Ausgestaltung des Montageelements kann bei der Montage das Einsetzen in den Hohlkörper erleichtern; im Betrieb sind aufgrund des Verschnappens bzw. sich reversibel Anlegens gleichwohl ein guter Reibkontakt und damit die gewünschte Dämpfung sichergestellt.

Über ihre Längenerstreckung können an der Fluidleitung bevorzugt mehrere Montageelemente befestigt sein. Nächstbenachbarte Montageelemente können dabei bspw. einen entlang der Längsachse der Fluidleitung genommenen Abstand von mindestens 20 mm bzw. 50 mm und (davon unabhängig) bspw. nicht mehr als 100 mm bzw. 50 mm voneinander haben. Auch in einer zur Längsachse der Fluidleitung senkrechten Schnittebene betrachtet können mehrere Montageelemente vorgesehen sein, die also um die Längsachse der Fluidleitung umlaufend aufeinander folgen, bevorzugt zwei Montageelemente, die besonders bevorzugt mit einer zweizähligen Symmetrie zueinander drehsymmetrisch sind (um die Längsachse der Fluidleitung). Generell sind im Rahmen dieser Offenbarung "ein" und "eine" als unbestimmte Artikel zu lesen, ohne ausdrücklich gegenteilige Angabe also immer auch als "mindestens ein" bzw. "mindestens eine".

Die Erfindung betrifft auch ein Verfahren zum Herstellen einer vorliegend offenbarten Strömungsmaschine, wobei das erste und das zweite Bauteil sowie das Montageelement zusammengesetzt werden. Bzgl. weiterer Verfahrensdetails wird ausdrücklich auch auf die übrige Offenbarung verwiesen. Im Falle der Formgedächtnislegierung kann das Montageelement bspw. auch im Zuge der Fertigung aufgeheizt werden, bspw. um mindestens 50 °C (und z. B. um nicht mehr als 200 °C bzw. 150 °C), um es einschnappen zu lassen (Einweg-Memory-Effekt). Bevorzugt erfolgt das Zusammensetzen bei Raumtemperatur, es ist aber andererseits auch ein gezieltes Kühlen der Bauteile denkbar. Im Vorfeld des Zusammensetzens kann ein generatives Herstellen des Montageelements bevorzugt sein, vgl. die vorstehenden Anmerkungen.

Die Erfindung betrifft auch die Verwendung eines als Bimetallelement ausgeführten und/oder eine Formgedächtnislegierung aufweisenden Montageelements in einer Strömungsmaschine, insbesondere einem Strahltriebwerk. Auch insoweit wird auf die vorstehende Offenbarung verwiesen. Formgedächtnis- und Bimetallfunktion können in einem Montageelement auch kombiniert sein, es schließt also im Allgemeinen das eine das andere nicht aus, wenngleich bevorzugt nur eine der Funktionen verwirklicht ist, auch aus Gründen der Komplexität.

### Kurze Beschreibung der Figuren

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einer schematischen Ansicht;
- Figur 2: in einem Querschnitt einer Stützstruktur des Strahltriebwerks gemäß Anspruch 1 mit erfindungsgemäßen Montageelementen;

### Bevorzugte Ausführung der Erfindung

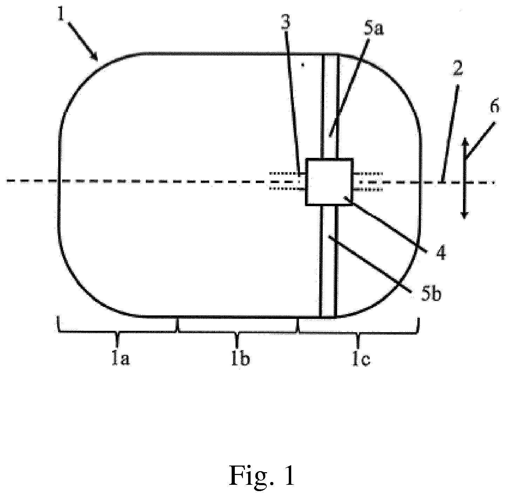

Figur 1 zeigt eine Strömungsmaschine 1 in schematischer Ansicht (ein Strahltriebwerk). Funktional gliedert sich die Strömungsmaschine 1 in Verdichter 1a, Brennkammer 1b und Turbine 1c. sowohl der Verdichter 1a als auch die Turbine 1c sind jeweils aus mehreren Stufen aufgebaut (nicht im Einzelnen gezeigt), jede Stufe setzt sich aus einem Leit- und einem Laufschaufelkranz zusammen. Die Laufschaufelkränze rotieren im Betrieb um die Längsachse 2 der Strömungsmaschine 1. Die Turbinenwelle 3 ist in einem Lager 4 geführt, das von Stützstreben in der übrigen Strömungsmaschine 1 gehalten wird. Diese Stützstreben stellen "zweite Bauteile" 5a, b dar, siehe unten.

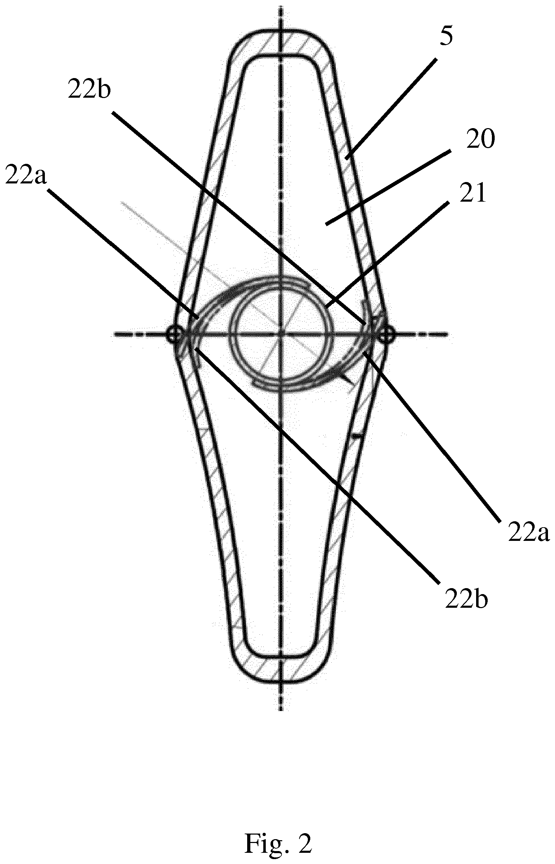

In dem schematischen, teilweisen Schnitt gemäß Figur 1 liegt die Längsachse 2 der Strömungsmaschine 1 in der Schnittebene. Figur 2 zeigt eine Detailansicht einer Stützstrebe im Schnitt, und zwar bei senkrecht zur radialen Richtung 6 der Strömungsmaschine 1 liegender Schnittebene (bezogen auf Figur 1 steht die Schnittebene der Darstellung gemäß Figur 2 also senkrecht auf der Zeichenebene und liegt horizontal).

Das zweite Bauteil 5, also die Stützstrebe, ist ein Hohlkörper, begrenzt nämlich ein Innenvolumen 20. Darin ist ein erstes Bauteil 21 angeordnet, nämlich eine Fluidleitung, die zur Versorgung des Lagers 4 mit Schmierstoff oder der Entlüftung dienen kann. Um die Längsachse 2 der Strömungsmaschine 1 umlaufend sind eine Mehrzahl Stützstreben vorgesehen, die dann jeweils mit einer Fluidleitung anderer Funktion belegt werden können.

Die Fluidleitung als erstes Bauteil 21 und die Stützstrebe als zweites Bauteil 5 werden zusammengesetzt und dann über Montageelemente 22 in ihrer Relativanordnung stabilisiert. An dem ersten Bauteil 21 (der Fluidleitung) sind die Montageelemente 22 jeweils angelötet, und zwar an der Außenwandfläche davon. An dem zweiten Bauteil 5 (der Stützstrebe) liegen die Montageelemente 22 jeweils nur flächig an, und zwar an einer das Innenvolumen 20 begrenzenden Innenwandfläche.

Die Montageelemente 22 können erfindungsgemäß jeweils als Bimetallelement oder aus einer Formgedächtnislegierung vorgesehen sein, also bei einer Temperaturänderung zumindest einmalig ihre Form ändern (Formgedächtnislegierung, Einweg-Memory-Effekt), im Falle des Bimetallelements auch reversibel ihre Form ändern.

Figur 2 illustriert diese Formänderung, zeigt nämlich die Montageelemente 22 jeweils für zwei Temperaturen. Im Kaltzustand, also bspw. beim Zusammensetzen, haben die Montageelemente 22 eine erste Form (als Montageelemente 22b dargestellt), sie sind jeweils nach innen, zu der Fluidleitung hin gekrümmt. Dies erleichtert das Einsetzen in die Stützstrebe.

Bei einer Erhöhung der Temperatur würden dann die Montageelemente 22 bei einer Abwesenheit des zweiten Bauteils 5 in die zweite dargestellte Form (als Montageelemente 22a dargestellt) übergehen, biegen sie sich also nach außen, von der Fluidleitung weg. In realiter begrenzt das zweite Bauteil 5, also die Stützstrebe, diese Verformung nach außen. Die Montageelemente 22 werden also mit der Temperaturzunahme mit einer zunehmenden Anpresskraft in die Anlage an der Stützstrebe gedrückt. Dieses temperaturabhängige Verhalten stellt somit einen Reibkontakt sicher, sodass die Fluidleitung gedämpft in der Stützstrebe gelagert ist.

## Patentansprüche

1. Strömungsmaschine (1) mit
einem ersten (21) und einem zweiten Bauteil (5), die in der Strömungsmaschine (1) in einer Relativanordnung zusammengesetzt sind, und mit
einem Montageelement (22), welches das erste (21) und das zweite Bauteil (5) in der Relativanordnung zumindest stabilisiert,
wobei das Montageelement (22) als Bimetallelement ausgeführt ist,
und das Montageelement (22) und das zweite Bauteil (5) lediglich aneinander anliegen, **gekennzeichnet dadurch dass** das erste Bauteil (21) eine Fluidleitung ist und das zweite Bauteil (5) eine Stützstrebe ist.

2. Strömungsmaschine (1) nach Anspruch 1, bei welcher das Bimetallelement derart vorgesehen ist, dass es das erste und das zweite Bauteil bei einer Temperaturzunahme zunehmend in der Relativanordnung stabilisiert.

3. Strömungsmaschine (1) nach Anspruch 1 oder 2, bei welcher das Bimetallelement mindestens zwei aneinander angeordnete Lagen aus unterschiedlichen Materialien aufweist, wobei mindestens eine der Lagen eine über ihre Flächenerstreckung variierende Dicke hat.

4. Strömungsmaschine (1) mit
einem ersten (21) und einem zweiten Bauteil (5), die in der Strömungsmaschine (1) in einer Relativanordnung zusammengesetzt sind, und mit
einem Montageelement (22), welches das erste (21) und das zweite Bauteil (5) in der Relativanordnung zumindest stabilisiert,
wobei das Montageelement (22) eine Formgedächtnislegierung aufweist,
und das Montageelement (22) und das zweite Bauteil (5) lediglich aneinander anliegen, **dadurch gekennzeichnet dass** das erste Bauteil (21) eine Fluidleitung ist und das zweite Bauteil (5) eine Stützstrebe ist.

5. Strömungsmaschine (1) nach einem der vorstehenden Ansprüche, bei welcher das Montageelement (22) zumindest zum Teil generativ gefertigt ist.

6. Strömungsmaschine (1) nach einem der vorstehenden Ansprüche, bei welcher das Montageelement (22) und das erste Bauteil (21) fest miteinander verbunden sind.

7. Strömungsmaschine (1) nach Anspruch 6, bei welcher das Montageelement (22) und das erste Bauteil (21) stoffschlüssig miteinander verbunden sind.

8. Strömungsmaschine (1) nach einem der vorstehenden Ansprüche, bei welcher die Fluidleitung eine Versorgungs- oder Entsorgungsleitung eines Lagers (4) einer Turbinenwelle (3) der Strömungsmaschine (1) ist.

9. Strömungsmaschine (1) nach einem der vorstehenden Ansprüche, bei welcher das Montageelement (22) derart vorgesehen ist, dass eine Anpresskraft, mit der das Montageelement (22) in die Anlage an dem zweiten Bauteil (5) gedrückt wird, mit steigender Temperatur zunimmt.

10. Strömungsmaschine (1) nach einem der vorstehenden Ansprüche, bei welcher das zweite Bauteil (5) ein Lager (4) einer Turbinenwelle (3) der Strömungsmaschine (1) trägt.

11. Strömungsmaschine (1) nach einem der vorstehenden Ansprüche, bei welcher die Stützstrebe ein Hohlkörper ist, in dem das erste Bauteil (21) angeordnet ist.

12. Strömungsmaschine (1) nach einem der vorstehenden Ansprüche, die als Strahltriebwerk ausgelegt ist.

13. Verfahren zum Herstellen einer Strömungsmaschine (1) nach einem der vorstehenden Ansprüche, wobei das erste (21) und das zweite Bauteil (5) und das Montageelement (22) zusammengesetzt werden.

## Claims

1. Turbomachine (1) having a first (21) and a second component (5), which are assembled in the turbomachine (1) in a relative arrangement, and having a mounting element (22), which at least stabilizes the first (21) and the second component (5) in the relative arrangement, the mounting element (22) being designed as a bimetal element, and the mounting element (22) and the second component (5) merely abutting one another, **characterized in that** the first component (21) is a fluid line, and the second component (5) is a support strut.

2. Turbomachine (1) according to claim 1, wherein the bimetal element is provided such that it increasingly stabilizes the first and the second component in the relative arrangement when there is an increase in temperature.

3. Turbomachine (1) according to either claim 1 or claim 2, in which the bimetal element has at least two layers of different materials that are arranged beside one another, wherein at least one of the layers has a varying thickness over the surface extent thereof.

4. Turbomachine (1) having a first (21) and a second component (5), which are assembled in the turbomachine (1) in a relative arrangement, and having a mounting element (22), which at least stabilizes the first (21) and the second component (5) in the relative arrangement, the mounting element (22) having a shape memory alloy, and the mounting element (22) and the second component (5) merely abutting one another, **characterized in that** the first component (21) is a fluid line and the second component (5) is a support strut.

5. Turbomachine (1) according to any of the preceding claims, wherein the mounting element (22) is at least partially additively manufactured.

6. Turbomachine (1) according to any of the preceding claims, wherein the mounting element (22) and the first component (21) are fixedly interconnected.

7. Turbomachine (1) according to claim 6, wherein the mounting element (22) and the first component (21) are integrally bonded together.

8. Turbomachine (1) according to any of the preceding claims, wherein the fluid line is a supply or disposal line of a bearing (4) of a turbine shaft (3) of the turbomachine (1).

9. Turbomachine (1) according to any of the preceding claims, wherein the mounting element (22) is provided such that a contact force with which the mounting element (22) is pressed into the apparatus on the second component (5) increases as the temperature increases.

10. Turbomachine (1) according to any of the preceding claims, wherein the second component (5) supports a bearing (4) of a turbine shaft (3) of the turbomachine (1).

11. Turbomachine (1) according to any of the preceding claims, wherein the support strut is a hollow body in which the first component (21) is arranged.

12. Turbomachine (1) according to any of the preceding claims that is designed as a jet engine.

13. Method for producing a turbomachine (1) according to any of the preceding claims, wherein the first (21) and the second component (5) and the mounting element (22) are assembled.

## Revendications

1. Turbomachine (1) dotée
d'un premier (21) et d'un second composant (5) qui sont assemblés dans la turbomachine (1) dans un agencement relatif, et
d'un élément de montage (22) qui stabilise au moins le premier (21) et le second composant (5) dans l'agencement relatif,
dans laquelle l'élément de montage (22) est conçu sous la forme d'un élément bimétallique, et
dans laquelle l'élément de montage (22) et le second composant (5) reposent simplement l'un contre l'autre,
**caractérisée en ce que**
le premier composant (21) est une conduite de fluide est et le second composant (5) est une jambe de force.

2. Turbomachine (1) selon la revendication 1, dans laquelle l'élément bimétallique est prévu pour stabiliser de plus en plus le premier et le second composant lors d'une augmentation de température dans l'agencement relatif.

3. Turbomachine (1) selon la revendication 1 ou 2, dans laquelle l'élément bimétallique comporte au moins deux couches juxtaposées constituées de matériaux différents, au moins l'une des couches ayant une épaisseur variable sur son étendue de surface.

4. Turbomachine (1) dotée
d'un premier (21) et d'un second composant (5) qui sont assemblés dans la turbomachine (1) dans un agencement relatif, et
d'un élément de montage (22) qui stabilise au moins le premier (21) et le second composant (5) dans l'agencement relatif,
dans laquelle l'élément de montage (22) comporte un alliage à mémoire de forme, et dans laquelle l'élément de montage (22) et le second composant (5) reposent simplement l'un contre l'autre,
**caractérisée en ce que**
le premier composant (21) est une conduite de fluide est et le second composant (5) est une jambe de force.

5. Turbomachine (1) selon l'une des revendications précédentes, dans laquelle l'élément de montage (22) est réalisé au moins partiellement de manière générative.

6. Turbomachine (1) selon l'une des revendications précédentes, dans laquelle l'élément de montage (22) et le premier composant (21) sont reliés de manière rigide.

7. Turbomachine (1) selon la revendication 6, dans laquelle l'élément de montage (22) et le premier composant (21) sont reliées par une liaison de matière.

8. Turbomachine (1) selon l'une des revendications précédentes, dans laquelle la conduite de fluide est une conduite d'alimentation ou d'évacuation d'un palier (4) d'un arbre de turbine (3) de la turbomachine (1).

9. Turbomachine (1) selon l'une des revendications précédentes, dans laquelle l'élément de montage (22) est prévu de telle manière qu'une force de pression, avec laquelle l'élément de montage (22) est enfoncé dans l'installation au niveau du second composant (5), augmente conjointement avec la température.

10. Turbomachine (1) selon l'une des revendications précédentes, dans laquelle le second composant (5) porte un palier (4) d'un arbre de turbine (3) de la turbomachine (1).

11. Turbomachine (1) selon l'une des revendications précédentes, dans laquelle la jambe de force est un corps creux dans lequel le premier composant (21) est disposé.

12. Turbomachine (1) selon l'une des revendications précédentes, laquelle turbomachine est réalisée sous la forme d'un turboréacteur.

13. Procédé de fabrication d'une turbomachine (1) selon l'une des revendications précédentes, dans lequel le premier (21) et le second composant (5) ainsi que l'élément de montage (22) sont assemblés.
